Europäisches Patentamt

European Patent Office

Office européen des brevets

(19)

(11) Veröffentlichungsnummer: **0 123 261**
**B1**

(12) **EUROPÄISCHE PATENTSCHRIFT**

(45) Veröffentlichungstag der Patentschrift: **04.07.90**

(21) Anmeldenummer: **84104351.6**

(22) Anmeldetag: **17.04.84**

(51) Int. Cl.⁵: **B 01 D 61/44,** B 01 D 61/48, B 01 D 71/58

(54) **Verfahren zur elektrochemischen Trennung von Ionengemischen.**

(30) Priorität: **23.04.83 DE 3314817**

(43) Veröffentlichungstag der Anmeldung:
**31.10.84 Patentblatt 84/44**

(45) Bekanntmachung des Hinweises auf die
Patenterteilung:
**04.07.90 Patentblatt 90/27**

(84) Benannte Vertragsstaaten:
**CH DE FR GB IT LI NL**

(56) Entgegenhaltungen:
EP-A-0 055 358
FR-A-2 001 574

JOURNAL OF THE AMERICAN CHEMICAL
SOCIETY, Band 104, 1982, Seiten 6139-6140,
Easton, US; P. BURGMAYER et al.: "An ION
Gate Membrane: Electrocheical Control of Ion
Permeability through a Membrane with an
Embedded Electrode"

(73) Patentinhaber: **BASF Aktiengesellschaft
Carl-Bosch-Strasse 38
D-6700 Ludwigshafen (DE)**

(72) Erfinder: **Puetter, Hermann, Dr.
Haardter Strasse 1
D-6730 Neustadt (DE)**
Erfinder: **Naarmann, Herbert, Dr.
Haardtblick 15
D-6719 Wattenheim (DE)**
Erfinder: **Penzien, Klaus, Dr.
Bensheimer Ring 18
D-6710 Frankenthal (DE)**

(56) Entgegenhaltungen:
**CHEMICAL ABSTRACTS, Band 86, Nr. 14, April
1977, Seite 35, Spalte 1, Zusammenfassungsnr.
90693f, Columbus, Ohio, US; R. MESSINA et al.:
"Properties of semi-conducting polymer
membranes with redox exchange properties;
Polyaniline and polypyrrole"**

**JOURNAL OF ELECTROANALYTICAL
CHEMISTRY, Band 147, 1983, Seiten 339-344,
Amsterdam, NL; P. BURGMAYER et al.: "Faster
Ion Gate Membranes"**

EP 0 123 261 B1

## EP 0 123 261 B1

**Beschreibung**

Die Erfindung betrifft ein Verfahren zur selektiven Trennung von vorzugsweise sauren Ionengemischen bzw. Gemischen von Salzen und Säuren in wäßriger Lösung in einer Anordnung, bei der mindestens zwei Elektrolyträume durch eine als Protonenaustauscher wirkende Membran getrennt sind und unter Zwischenschaltung je einer weiteren elektrisch leitfähigen Membran eine elektromotorische Kraft einwirkt.

Ionenaustauschermembranen finden vielfältigen und steigenden Einsatz bei der Elektrolyse, bei der Elektrodialyse, als Trennwand in Batterien und Akkumulatoren sowie zu analytischen Zwecken. Eines der wichtigsten Kriterien für die Verwendbarkeit von Ionenaustauschermembranen ist ihre Selektivität. Je nach technischem Einsatzgebiet üben Ionenaustauschermembranen eine mehr oder weniger hohe Sperrwirkung gegenüber verschiedenen ionogenen oder nichtionogenen Verbindungen aus, während sie für andere Verbindungen—meist möglichst spezifisch—durchlässig sind.

Beispielsweise sperren handelsübliche Anionenaustauschmembranen in verdünnten Lösungen zu $\geq 90\%$ gegenüber Kationen, während sie für Anionen durchlässig sind. Dasselbe gilt umgekehrt für Kationenaustauschermembranen, sie sind durchlässig für Kationen und nicht für Anionen. Solche Membranen finden beispielsweise Verwendung bei der Behandlung von Meerwasser oder Brackwasser durch Elektrodialyse zur Herstellung von Speisesalz oder zur Gewinnung von Trinkwasser.

Normalerweise besitzten z.B. Anionenaustauschermembranen keine besondere Selektivität für unterschiedliche Anionen. Eine solche Selektivität kann durch spezielle Modifikationen erreicht werden; so sind Membranen bekannt, die für einwertige Anionen gut, für zweiwertige aber wenig durchlässig sind. Eine Membran mit variabler Durchlässigkeit für verscheidene Ionen wird in J. Am. Chem. Soc. 104, S. 6139—6140 (1982) beschrieben.

Bei der Regenerierung oder Weiterverarbeitung von sauren schwermetallhaltigen Abwässern ist es oft nötig, die überschüssige Säure abzutrennen. Hierbei sollen die Metallkationen quantitativ zurückgehalten werden; das leisten bisher bekannte Kationenaustauschermembranen nur unvollständig.

Eine wichtige Voraussetzung für die Selektivität von Ionenaustauschermembranen ist ihr Festionengehalt. Handelsübliche Membranen haben in der Regel Festionengehalte von etwa 1 bis 2 Milliequivalent pro Gramm Trockensubstanz. Je höher diese Konzentration in der Membran ist, desto höher ist im allgemeinen ihre Selektivität. Nachteilig für die Selektivität ist der hohe Quellungsgrad von Membranen, sie enthalten im Betriebszustand bis zu 40% und mehr Wasser.

Verfahren zur selektiven Trennung von Ionen in wäßriger Lösung werden z.B. in dem Buch von P. Meares, Ed. "Membrane Separation Processes", Elsevier, Amsterdam 1976 und in dem Buch von D. S. Flett Ed. "Ion Exchange Membranes" Ellis Horwood Ltd., Chichester, England (1983) beschrieben.

Aufgabe der Erfindung ist es, ein Verfahren der eingangs genannten Art zur Verfügung zu stellen, das die Nachteile von Verfahren in bekannten Vorrichtungen mit Ionenaustauschermembranen vermeidet.

Die Aufgabe der Erfindung wird dadurch gelöst, daß die als Protonenaustauscher wirkende Membran aus auf elektrochemischem Weg hergestellten Polypyrrol besteht und die der Membran unmittelbar benachbarten Elektrolyträume mit dem zu trennenden Ionengemisch einerseits und einem Auffangelektrolyten andererseits beschickt werden.

Das erfindungsgemäße Verfahren kann z.B. zur Durchführung von Elektrodialyseverfahren, von Elektrolyseverfahren oder von elektrochemischen Analyseverfahren Verwendung finden. Bei diesen Verfahren werden wäßrige Lösung von Ionen verwendet. Insbesondere bei Elektrodialyseverfahren werden der Dilautraum und der Konzentratraum durch die erfindungsgemäß zu verwendende Ionenaustauschmembran getrennt.

Die erfindungsgemäß zu verwendenden Ionenaustauschermembranen sind selektiv durchlässig nur für Protonen und kleine insbesondere einwertige Anionen wie beispielsweise Chlorid, während sie für Kationen insgesamt und für große Anionen, insbesondere aber mehrwertige Ionen, wie beispielsweise Sulfat $Fe^{2+}$, $Fe^{3+}$, $Ti^{3+}$ weitgehend undurchlässig sind.

Es ist bekannt, daß sich Polymerisate des Pyrrols in einigen Anwendungsbereichen wie Metalle verhalten. Metalle sind zwar im allgemeinen gute Elektronenleiter aber sind als Ionenaustauschermaterialien ungeeignet. Es zeigte sich nun, daß Filme aus Polymerisaten des Pyrrols sich überraschenderweise als Ionenaustauschermembranen verwenden lassen, ohne daß sich ihre metallischen Eigenschaften oder ihre Redoxeigenschaften bemerkbar machen, wenn man sie in Kontakt mit ionischen Leitern bringt, also wie eine Ionenaustauschermembran behandelt und den Kontakt mit metallischen Leitern vermeidet.

Die erfindungsgemäß zu verwendenden Ionenaustauschermembranen stellen einen deutlichen technischen Fortschritt dar. Aufgrund ihrer physikalischen und chemischen Eigenschaften sind Membranen aus Polymerisaten aus der Klasse der Pyrrole herkömmlichen Membranen in vielen Punkten überlegen. Ihre hohe mechanische Stabilität gestattet es, sie ohne sonst bei Membranen übliche Stützgewebe einzusetzten, ihr niedriger Wassergehalt und der darauf beruhende niedrige Quellungsgrad verleiht ihnen gegenüber bisherigen Membranen weitere mechanische Vorteile. Sie werden anders als andere Membranen vor org. Lösungsmitteln wie Acetonitril nicht angegriffen und eignen sich somit besonders für organische Elektrolysen. Ihre thermische Stabilität ist gegenüber handelsüblichen Membranen um über 200°C gesteigert. Sie lassen sich thermisch bearbeiten, beispielsweise heiß auf Stützgewebe aufpressen und erlangen so eine nocht weiter gesteigerte Stabilität, ohne

2

Membraneigenschaften einzubüßen. Aufgrund ihres neuartigen Selektivitätsprofils erschließen sich für Membranen aus Polymerisaten aus der Klasse der Pyrrole einige interessante Einsatzbereiche. So eigen sich Polypyrrolmembranen in einzigartiger Weise als Trennwand für Lösungsakkumulatoren. Es ist beispielsweise vorgeschlagen worden, das System $Fe^{3+}/Ti^{3+}$ als elektrischen Energiespeicher zu verwenden. Voraussetzung für eine Realisierung ist eine Trennwand, die sowohl die Vermischung der Eisen- und Titanionen verhindert als auch eine Redoxentladung des Systems an der Grenzfläche unterbindet. Wie weiter unten gezeigt, wird dieser Effekt durch Polypyrrolmembranen erzielt.

Wegen seiner bevorzugten Selektivität für Protonen eignet sich Polypyrrol als Membran für die Elektrodialyse von Säuren; beispielsweise zur Reinigung und Aufkonzentrierung von Abfallschwefelsäure oder zur Abtrennung von Säuren aus Salzgemischen.

Die Folien sind thermisch bis 300°C stabil, unempfindlich gegen Luft und wäßrige Lösungen—insbesondere gegen wäßrige Säuren. Sie sind flexibel und lassen sich wie andere Ionenaustauschermembranen zwischen Rahmen einspannen.

Die Stromdichtebelastung der Membranen kann 0,01—50 A/dm² betragen, bei Elektrodialyse bevorzugt 0,1—10 A/dm², bei Elektrolyse 0,5—50 A/dm². Die Membranen können umgepolt werden, ohne daß sie elektrochemisch umgewandelt werden.

Die elektrochemische Herstellung von Polymerisaten aus der Klasse der Pyrrole, die sich als Membranenmaterial eignen, ist bekannt und mehrfach beschrieben. Sie ist nicht Gegenstand der Erfindung. Die Verbindung aus der Klasse der Pyrrole, die sich für die Herstellung der erfindungsgemäß zu verwendenden Polymerisate eignen, sind einmal Pyrrol selbst als auch die substituierten Pyrrole, die N-Alkylpyrrole, N-Arylpyrrole, die an den C-Atomen monoalkyl- oder dialkylsubstituierten Pyrrole und die an den C-Atomen monohalogen oder dihalogen substituierten Pyrrole. Es können Pyrrol allein oder in Mischung mit anderen Verbindungen aus der Klasse der Pyrole verwendet werden. Vorzugsweise verwendet man Polymerisate aus unsubstituiertem Pyrol selbst. Werden Polymerisate aus substituierten Pyrrolen eingesetzt, so sind Polymerisate aus 3,4-Dialkylpyrrol, insbesondere mit 1 bis 4 C-Atomen im Alkyl, sowie auch aus 3,4-Dihalogenpyrrole, insbesondere aus 3,4-Dichlorpyroll, bevorzugt.

Es können auch gegebenenfalls bestimmte Mengen anderer Verbindungen, die mit Pyrrolen copolymerisieren, mitverwendet werden. Als Verbindungen, die mit Pyrrolen copolymerisieren, eignen sich z.B. Cyclopentadienazulen und dessen Derivaten, wie Benzazulen, Gujaazulen, ferner Fulvene, Inden oder auch Quadratsäure. Es kommen auch heterocyclische Verbindungen in Frage, wie Imidazol, Thiazol, Furan oder Thiophen. Auch 2-Bromthiophen, 2,6-Dimethylpyridin und Pyrazin können verwendet werden. Bezogen auf 10 Teile Pyrrol, können 1 bis 10 Teile der mit Pyrrol copolymerisierenden Verbindungen Verwendung finden.

Die Polymerisation von Pyrrol oder Pyrrol enthaltenden Gemischen kann bei Temperaturen −30 und 100°C, vorzugsweise bei +20 bis 45°C und bei Drucken von 1 bis 1000 bar, vorzugsweise von 1 bis 5 bar, erfolgen. Meistens werden Reaktionszeiten von 0,1 bius 600 Minuten, vorzugsweise von 1 bis 10 Minuten, benötigt.

Die Polymeren werden durch elektrochemische Polymerisation hergestellt, wobei die Polymerisation der Monomeren durch anodische Oxidation erfolgt. Es werden hierzu beispielsweise Stromdichten von 2 bis 20 mAmp/cm² verwendet. Es werden meistens Spannungen im Bereich von 10 bis 300 Volt angelegt. Sind bei der Polymerisation Leitsalze zugegen, so werden, bezogen auf 100 Teile Monomers, 5 bis 200 Teile Leitsalze verwendet. Die Polymerisation von Pyrrol oder der Gemische aus Pyrrol und anderen Verbindungen kann in Hilfsflüssigkeiten erfolgen.

Die Hilfsflüssigkeiten werden entweder als Lösung oder als Suspensionsmittel verwendet. So lösen sich z.B. die Pyrrole oder die anderen Monomeren in den Hilfsflüssigkeiten. Bevorzugte Hilfsflüssigkeiten sind z.B. Alkohole, Ether wie Dioxan oder 1,2-Dimethoxiether, Eisessig, Aceton, Dimethylformamid oder N-Methylpyrrolidon. Wasser kann zur Erhöhung der elektrischen Leitfähigkeit zugesetzt werden.

Bei der Auswahl der Gewichtsteile von Pyrrolen oder Gemischen aus Pyrrol und anderen Verbindungen sowie Hilfsflüssigkeit ist darauf zu achten, daß nicht weniger als 0,1 Teile Hilfsflüssigkeit auf 100 Teile des Pyrrols oder als Pyrrol enthaltendes Benzol entfallen. Vorzugsweise verwendet man 5 bis 100 Gewichtsteile Hilfsflüssigkeit, bezogen auf 100 Teile Pyrrol oder des Gemisches.

In zu polymerisierenden System aus Pyrrolen und Hilfsflüssigkeit können gegebenenfalls bei den elektrochemischen Verfahren der Polymerisation, um die Leitfähigkeit zu erhöhen, Elektrolyte zugesetzt werden. Hierzu eignen sich insbesondere die Alkali- oder Ammoniumsalze von $PF_6^-$, $ClO_4^-$, $BF_4^-$, $AsF_6^-$ weiterhin organische Säuren, Benzolsulfonsäure und ähnliche. Diese sogenannten Leitsalze sind bekannt.

Bei der Polymerisation können gegebenenfalls auch weitere Hilfsstoffe, wie Oxidationsmittel, z.B. Persulfat, Kaliumpermanganat oder auch Sauerstoff zugegen sein.

Die Polymerisate scheiden sich als Filme an den Anoden ab. Sie können zur Entfernung noch anhaftende Leitsalze mit Lösungsmittel gewaschen werden. Die Trocknung der Polymerisate erfolgt zweckmäßig bei Temperaturen zwischen 50 und 150°C. Die Polymerisate haben die Form eines dünnen Films, der die Größe der Elektrode einnimmt. Zweckmäßig sind solche Membranmaterialien, die eine Dicke zwischen 0,10 bis 1 mm und vorteilhaft 0,05 bis 0,2 mm haben.

Weitere Verwendungsmöglichkeiten der Ionenaustauschermembranen oder die Bedingungen für ihre Verwendung ergeben sich aus den folgenden Beispielen.

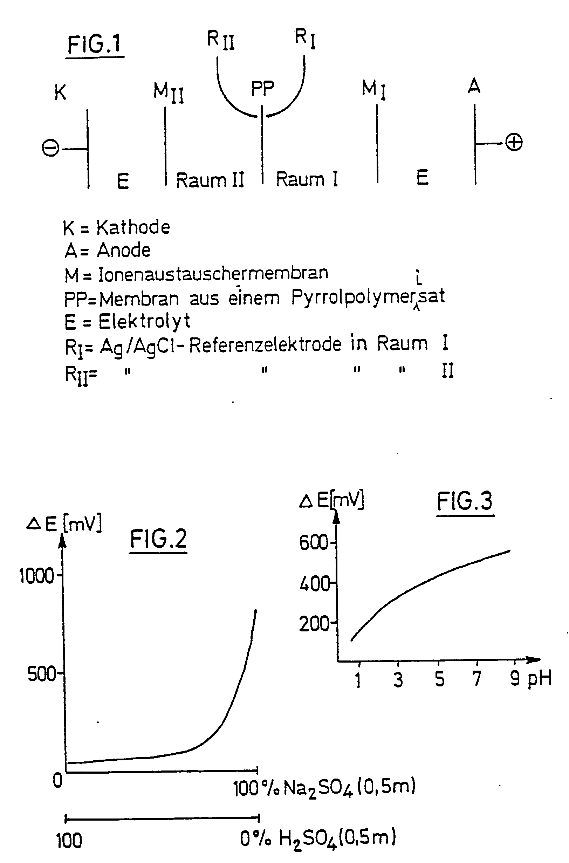

Die in den Beispielen verwendete Apparatur ist in Abbildung 1 wiedergegeben.

## EP 0 123 261 B1

Sie besteht aus drei Arten von Räumen: den Elektrolyten enthaltenden Raum I und Raum II. Jeder dieser Räume wird durch einen Plexiglasrahmen (Innenmaße 3,5×5 cm), durch eine Membran auf der einen Seite und eine Elektrode (Elektrolyt) bzw. die Membran aus Pyrrolpolymerisat (Raum I, II) auf der anderen Seite gebildet. Die Rahmen haben je eine Zu- und Ableitung für die jeweilige Testlösung.

In die Räume I und II ragen zusätzlich zwei Luggin-Kapillaren, die es gestatten, mit Hilfe der Referenzelektroden $R_I$ und $R_{II}$ bei Bedarf den Potentialabfall an der Membrane zu bestimmen.

Elektrolyt, Raum I und Raum II sind jeweils in einen Kreislauf eingebaut, bestehend aus Vorratsgefäß, Wärmetauscher und Magnetkreiselpumpe. Alle Kreisläufe sind thermostatisiert auf 20°C.

Beispiele

In den Beispielen 1 bis 6 wurden Membranen verwendet, die elektrochemsich aus reinem Pyrrol gemäß DE—A—30 49 551, Beispiel 1, hergestellt worden sind.

Beispiel 1

Es wurde Polypyrrol (PP) als Protonenaustauschermembran verwendet. $M_I$ und $M_{II}$ sind Anionenaustauschermembranen aus vernetztem Polystyrol mit Trimethylammoniumgruppen (2 meq/g Festionen)

| | |
|---|---|
| Elektrolyt: | 495 g 0,95 %ige $H_2SO_4$ |
| Raum I: | 515 g 0,94 %ige $H_2SO_4$ |
| Raum II: | 510 g 0,94 %ige $H_2SO_4$ |

Bei einer Stromstärke von 0,5 A wird 4 h, 10 min umgepumpt. Am Ende dieser Zeit war der $H_2SO_4$-Gehalt im Raum I auf 0,45% abgesunken, in Raum II war er auf 1,45% angestiegen, der $H_2SO_4$-Gehalt im Elektrolyten blieb unverändert bei 0,95% Stromausbeute: 70%.

Beispiel 2

Selektivität $Na\oplus/H\oplus$

Es wurde eine Apparatur verwendet wie in Beispiel 1 beschrieben.

$M_I=M_{II}$ Kationenaustauschermembranen auf Basis perfluorierter Sulfonsäuren (1 meq/g Festion).

Kreislauf I, II und Elektrolytkreislauf: 0,5 molare $Na_2SO_4$-Lösung. Bei 0,2 A wurden die Räume umgepumpt. Im Raum I und II wird $Na_2SO_4$ sukzessive durch 0,5 molare $H_2SO_4$ ersetzt. Der Potentialabfall an der PP-Membran wird gemessen. Der Potentialablauf ist in Abb. 2 dargestellt.

Beispiel 3

Selektivität $H^+/SO_4^{2-}$

PP=Polypyrrol

$M_I$=Anionenaustauschermembran wie in Beispiel 1

$M_{II}$=Kationenaustauschermembran wie in Beispiel 2

| | |
|---|---|
| Elektrolyt: | 400 g 2,2 %ige $H_2SO_4$ |
| Raum I: | 500 g 4,9 %ige $H_2SO_4$ |
| Raum II: | 500 g 5,0 %ige $H_2SO_4$ |

Bei einer Stromstärke von 0,5 A wird 4,25 h elektrodialysiert. Am Ende dieser Zeit war der $H_2SO_4$-Gehalt im Elektrolyten auf 3,1% angestiegen, im Raum I war er auf 4,20% abgefallen, im Raum II blieb die $H_2SO_4$-Konzentration mit 5,0% konstant. Polypyrrol arbeitet als Protonenaustauschermembran mit einer Selektivität von $\geq90\%$.

Beispiel 4

Polypyrrol als Trennwand für Redoxsysteme

Es wurde eine Appartur wie in Beispiel 1 verwendet.

| | |
|---|---|
| Elektrolyt: | 500 g 3 %ige $H_2SO_4$ |
| Raum I: | 20,2 g (0,05 Mol) Cer(IV)Sulfat, 250 g 10 %ige $H_2SO_4$, 230 g $H_2O$ |
| Raum II: | 500 g 0,1 n Eisenammonsulfatlösung |

Die Räume werden 1,5 h stromlos umgepumt, es wird keine Abnahme des CerIV-Gehaltes beobachtet (Titration mit Eisenammonsulfat).

Beispiel 5

Polypyrrol als Trennwand für Redoxsysteme

Es wurde eine Apparatur wie in Beispiel 1 verwendet.

| Elektrolyt: | 2,5 %ige $H_2SO_4$ | |
|---|---|---|
| Raum I: | 0,1 n $FeSO_4$ | je 500 g |
| Raum II: | 0,1 n $Fe_2(SO_4)_3$ | |

Die Lösungen werden umgepumpt. Der Gehalt an $Fe^{2+}$ in Raum I blieb über den Versuchszeitraum (3 Tage) konstant.

Beispiel 6

Polypyrrol als pH-Indikatormembran

Es wurde eine Apparatur wie in Beispiel 1 verwerndet; Elektrolyt: 500 g 5 %ige $Na_2SO_4$-Lösung. In den Räumen I und II werden Mischungen aus NaCl und HCl, bei einer konstanten Chloridkonzentration von 0,1 Mol/kg eingesetzt. Bei 0,05 A wird das Membranpotential in Abhängigkeit von pH bestimmt. Der pH/mV-Verlauf ist in Abb. 3 dargestellt.

Beispiel 7

Verwendung eines Ionenaustauschermembran PP aus 50% Pyrol und 50 % Furan
Apparatur wie in Beispiel 1 ($M_I$, $M_{II}$: Kationenaustauschermembranen)

| Elektrolyt: | 5 %ige $H_2SO_4$ | |
|---|---|---|
| Raum I: | 5 %ige $H_2SO_4$ | je 800 g |
| Raum II: | 5 %ige $H_2SO_4$ | |

Stromstärke/Membranpotential-Verlauf:

| i[A] | $\Delta U$[mV] | $\Delta U^{a)}$[mV] |
|---|---|---|
| 0 | 0 | 0 |
| 0,2 | −38 | 34 |
| 0,4 | −77 | 71 |
| 0,6 | −115 | 107 |
| 0,8 | −152 | 142 |
| 1,0 | −183 | 175 |

[a] die Elektroden waren in diesem Fall umgepolt.

Bei einer Stromstärke von 1 A wird 8 h lang elektrolysiert, die $H_2SO_4$-Konzentration in Raum I und Raum II blieb gegenüber den Anfangswerten innerhalb der Fehlergrenze konstant (±0,1 %). Die Selektivität $H^+/SO^{2-}_4$ ist somit 95%.

Beispiel 8a)

| Elektrolyt: | 15 %ige $H_2SO_4$ | |
|---|---|---|
| Raum I: | 3,5 %ige HCl | je 800 ml |
| Raum II: | 3,5 %ige HCl | |

Stromstärke/Membranpotential-Verlauf:

| i[A] | ΔU[mV] | ΔU[a][mV] |
|---|---|---|
| 0 | 0 | 0 |
| 0,2 | −25 | 27 |
| 0,4 | −53 | 56 |
| 0,6 | −80 | 84 |
| 0,8 | −107 | 112 |
| 1,0 | −133 | 138 |

[a] Die Elektroden waren in diesem Fall umgepolt

Bei einer Stromstärke von 1A wird 8h, 10 min lang elektrolysiert. Die $Cl^{\ominus}$-Konzentration in Raum II ist danach von anfangs 3,43% auf 3,14% abgesunken, in Raum II ist sie von 3,46% auf 4,03% angestiegen. Die Stromausbeute des $Cl^{\ominus}$-Transportes ist somit etwa 30%, die Selektivität $H^{\oplus}/Cl^{\ominus}$ 70%.

Beispiel 8b)

| Elektrolyt: | 5 %ige $Na_2SO_4$ | |
|---|---|---|
| Raum I: | 6 %ige NaCl | je 800 g |
| Raum II: | 6 %ige NaCl | |

Stromstärke/Membranpotential-Verlauf:

| i[A] | ΔU[mv] | ΔU[a][mV] |
|---|---|---|
| 0 | 0 | 0 |
| 0,2 | −87 | 88 |
| 0,4 | −177 | 185 |
| 0,6 | −263 | 282 |
| 0,8 | −347 | 387 |
| 1,0 | −428 | 493 |

[a] Die Elektroden waren in diesem Fall umgepolt.

Bei einer Stromstärke von 1A wird 2h, 45 min lang elektrodialysiert. Die $Cl^{\ominus}$-Konzentration in Raum II sank in dieser Zeit von 3,66 auf 3,33%, in Raum I stieg sie von 3,63 auf 4,04%.
Die Stromausbeute des $Cl^{\ominus}$-Transportes ist somit etwa 90%. Aufgrund leichter pH-Verschiebungen in allen Räumen ($H^{\oplus}$-Transport) kann keine genaue $Cl^{\ominus}/Na^{\oplus}$-Selektivität angegeben werden.

**Patentanspruch**

Verfahren zur elektrochemischen Trennung von vorzugsweise sauren Ionengemischen bzw. Gemischen von Salzen und Säuren in einer Anordnung, bei der zwei Elektrolyträume durch eine als Protonenaustauscher wirkende Membran getrennt sind und, unter Zwischenschaltung je einer weiteren, elektrisch leitfähigen Membran, über Elektroden eine elektromotorische Kraft einwirkt, dadurch gekennzeichnet, daß die als Protonenaustauscher wirkende Membran aus auf elektrochemischem Weg erhaltenem Polypyrrol besteht und die der Membran unmittelbar benachbarten Elektrolyträume mit dem zu trennenden Ionengemisch einerseits und einem Auffangelektrolyten andererseits beschickt werden.

# EP 0 123 261 B1

**Revendication**

Procédé pour la séparation électrochimique de mélanges ioniques acides de préférence ou de mélanges de sels et d'acides dans une cellule dans laquelle deux chambres d'électrolyte sont séparées par une membrane jouant le rôle d'échangeur de protons et dans laquelle, avec insertion à chaque fois d'une autre membrane conductrice de l'électricité, une force électromotrice agit par des électrodes, caractérisé en ce que la membrane jouant le rôle d'échangeur de protons est constituée de polypyrrole obtenu par voie électrochmique et les chambres d'électrolyte directement contigües à la membrane sont chargées avec le mélange ionique à séparer d'un côté et avec un électrolyte collecteur de l'autre côté.

**Claim**

A method for the electrochemical separation of, preferably, acidic ion mixtures or mixtures of salts and acids in an arrangement in which two electrolyte spaces are separated by means of a membrane acting as a proton exchanger and an electromotive force acts via electrodes, with insertion of a further electrically conductive membrane, wherein the membrane acting as a proton exchanger consists of polypyrrole obtained by an electrochemical method, and the electrolyte spaces directly adjacent to the membrane are charged with ion mixture to be separated on the one hand and with an accepting electrolyte on the other hand.

FIG.1

$R_{II}$   $R_I$

PP

K   $M_{II}$   $M_I$   A

⊖ ⊢   ⊣ ⊢⊕

E   Raum II   Raum I   E

K = Kathode
A = Anode
M = Ionenaustauschermembran
PP = Membran aus einem Pyrrolpolymerisat
E = Elektrolyt
$R_I$ = Ag/AgCl-Referenzelektrode in Raum I
$R_{II}$ = " " " " II

FIG.2

$\Delta E$ [mV]

1000 –
500 –
0

100% $Na_2SO_4$ (0,5m)
100   0% $H_2SO_4$ (0,5m)

FIG.3

$\Delta E$ [mV]

600 –
400 –
200 –

1   3   5   7   9 pH